# EUROPEAN PATENT SPECIFICATION

(11) **EP 2 855 595 B1**
(45) Date of publication and mention of the grant of the patent: **30.12.2020**
(21) Application number: 13796809.5
(22) Date of filing: 30.05.2013
(51) Int. Cl.: C08L 101/00, C08K 7/00, C08K 3/00, C08J 5/00, B32B 27/00, B29B 17/00, B29L 7/00, B29K 509/00, B29K 23/00, B32B 27/20, B32B 27/32, B32B 37/12, B29K 105/16, B29L 9/00, C08K 3/22, C08K 3/26, C08K 7/02, C08K 3/14, C08K 7/14, C08K 11/00

(54) **POLYMERIC COMPOSITES, RESULTING PANELS, AND METHOD FOR PRODUCING THE SAME**
POLYMERVERBUNDSTOFFE, PLATTEN DARAUS UND VERFAHREN ZUR HERSTELLUNG DAVON
COMPOSITES POLYMÈRES, PANNEAUX RÉSULTANTS ET LEUR PROCÉDÉ DE PRODUCTION

(30) Priority: 30.05.2012 US 201261653173 P; 19.10.2012 US 201261716048 P; 15.03.2013 US 201361788986 P
(43) Date of publication of application: 08.04.2015
(73) Proprietor: Magma Flooring LLC, River Falls WI 54022 (US)
(72) Inventor: CERNOHOUS, Jeffrey Jacob, Hudson, Wisconsin 54016 (US); CERNOHOUS, Brandon J., Hudson, Wisconsin 54016 (US); BENNETT, Greggory S., Hudson, Wisconsin 54016 (US); GARRETT S., Van Gorden, New Richmond, Wi 54017 (US)
(74) Representative: Röthinger, Rainer
(86) International application number: PCT/US2013/043342
(87) International publication number: WO 2013/181379

(56) References cited:
- EP-A1- 2 754 688
- WO-A1-2008/094529
- WO-A1-2009/134403
- WO-A2-02/103113
- GB-A- 2 063 155
- JP-A- 2002 322 810
- US-A1- 2007 027 234
- US-A1- 2008 187 739
- US-A1- 2012 059 074
- US-B1- 6 271 270

## Description

### TECHNICAL FIELD

Panels comprising a substrate derived from thermal compression bonding particulates or pellets of a polymeric material and methods for producing said panels in this disclosure are suitable for various applications, and more particularly flooring applications. The resulting substrates possess superior moisture resistance and mechanical properties that enable utilization in indoor, outdoor, construction, and marine applications.

### BACKGROUND

The flooring market frequently utilizes polyvinyl chloride (PVC) as a material for a base substrate in a multi-billion dollar market that continues to exhibit substantial growth. However, regulatory pressures are driving leading flooring manufacturers to actively seek PVC-free alternatives. The environmental and regulatory pressures are due to long-suspected PVC health hazards and well known end-of-life waste management challenges. Additionally, it is well documented that PVC contains migrating additives (plasticizers) that are observed to cause odor and have been implicated as potential health hazards. It is also a known fact that PVC releases highly toxic chemicals when burned or improperly disposed of at the end of its useful life cycle. Because of these issues, various regulatory agencies around the world are pressing for a ban on PVC. The European Union has been particularly aggressive in pursuing regulatory action and has banned PVC use in toys and is considering a full ban. All of these actions negatively impact the consumer's perception of PVC and are requiring manufacturers, including flooring manufacturers to urgently seek a suitable alternative.

Despite the high pressure to replace PVC in applications such as flooring, it has been difficult to find a suitable alternative material because of PVC's inherent features of low cost, durability, moisture resistance, tailored stiffness, dimensional stablility and flame retardancy. Various products have been developed to replace PVC to date but none have offered a price-to-performance ratio to make them attractive for broad commercial utility in the flooring market. Furthermore, none of the non-PVC alternatives have been of significant commercial utility for the rapidly growing laminate flooring market segment where a relatively thick, stiff and moisture resistant substrate is required to enable efficient and innovative installation in various forms and applications.
US 2012/059074 A1 discloses a composite comprising a recycled butyl ionomer and a filler. For example, the composite exhibits less than 20% decrease in ultimate tensile strength as compared with a composite made from a non-recycled butyl ionomer that is otherwise identical in composition to the recycled butyl ionomer.
JP 2002322810 A discloses a plastic composite panel having a center layer and an outer layer formed outside the center layer, a specific filler having an average aspect ratio of 2.5 or more is contained in the outer layer.
US 6271270 B1 discloses thermoplastic composite, comprising: a matrix of recycled thermoplastic comprising at least one of the group consisting of polyethylene, polypropylene, nylon, PET and styrene-butadiene rubber; and a plurality of high modulus fibers, said high modulus fibers comprising at least one of the group consisting of glass fibers, natural fibers, carbon fibers, and aramid fibers, each of said high modulus fibers having a minimum length of approximately 1/2 of an inch and a minimum modulus of one million psi, wherein a positive amount up to 10 percent by weight of said recycled thermoplastic comprises a graft copolymer of maleic anhydride with polypropylene for bonding said recycled thermoplastic to said high modulus fibers.
EP 2754688 A1 discloses a composition of at least propylene-based elastomer and polymer-containing waste of floor covering, preferably polypropylene-containing carpet waste.

### SUMMARY

The absence of a breakthrough innovation to cost-effectively replace PVC combined with the strong environmental and regulatory pressure to replace PVC represents a unique opportunity to technologically revolutionize a flooring market segment that is urgently seeking such an alternative. This disclosure is directed to the formation of panels of polymeric composites derived from a reclaimed polymeric material. This material, upon further processing, is well suited to replace PVC in flooring applications. The reclaimed polymeric material is generally a material that is not easily melt processed due to its varying polymeric components, varying filler content, varying cellulosic fiber content, and its varying and relatively high moisture content. In certain embodiments, the material can be rendered usable by combining it with other additives and fillers. For example, a desiccant may enable the melt processing of the material in certain forms to create a desirable polymeric composite that may be subsequently processed. In some embodiments, the reclaimed polymeric material contains, or is combined with, a high aspect ratio filler, a lightweight filler and optionally other organic and inorganic fillers to create a unique polymer composite.

The polymeric composite derived from the reclaimed polymeric material is well suited to form substrates used in a variety of applications requiring moisture resistance, including flooring applications. Generally, the polymeric composite is thermally compressed into a flat panel using processing equipment such as, for example, a continuous double belt press. In one embodiment, the polymeric composite containing expanded volcanic ash is spread as pellets onto a continuous double belt press, thermally compressed to form a continuous flat panel in the down stream direction, and then subsequently divided into smaller flat panels. The substrates of this disclosure, made using the polymeric composite derived from the reclaimed polymeric material, may be formed to serve various industries and end use applications.

The substrates may be employed to create multilayered articles. Aesthetic layers may be bonded to a surface of the substrate to create articles suited for flooring applications. Laminated flooring tile, similar to so called Luxury Vinyl Tile, is one embodiment employing the substrates of this disclosure as a base panel. The substrates may also be utilized as base panels for receiving and holding other functional layers. Functional layers may include materials that provide desirable characteristics such as adhesion, dampening (sound, etc.), friction, and antistatic properties, among others.

The resulting panels produced from various embodiments of the substrates disclosed exhibit excellent physical characteristics and a resistance to moisture. The coefficient of thermal expansion of the panels is at a level that makes the panels very desirable for end use applications, such as flooring. A low coefficient of thermal expansion minimizes certain types of floors from expanding and contracting when exposed to heat sources or even sunlight. Certain embodiments have an excellent resistance to moisture and exhibit negligible moisture uptake. The moisture resistance is a very attractive feature that renders floors durable, less likely to expand due to moisture and improves their longevity especially in moist or humid environments.

The following terms used in this application are defined as follows:
"Cellulosic Material or Filler" means natural or man-made materials derived from cellulose. Cellulosic materials include, for example: wood flour, wood fibers, sawdust, wood shavings, newsprint, paper, flax, hemp, grain hulls, kenaf, jute, sisal, nut shells or combinations thereof.
"Composite" means a mixture of a polymeric material and another compound or filler.
"Desiccant" means a material that either induces or sustains a state of dryness.
"High Aspect Ratio Filler" means an organic or inorganic material having an aspect ratio of at least 2: 1, and in some embodiments at least 4: 1, that does not possess viscoelastic characteristics under the conditions utilized to melt process a filled polymeric matrix.
"Filler" means an organic or inorganic material that does not possess viscoelastic characteristics under the conditions utilized to melt process a filled polymeric matrix.
"Lightweight Filler" means an organic or inorganic material with a specific gravity of less than 0.7 g/cm³ and does not possess viscoelastic characteristics under the conditions utilized to melt process a filled polymeric matrix.
"Melt Processable Composition" means a formulation that is melt processed, typically at elevated temperatures, by means of a conventional polymer processing technique such as, for example, extrusion or injection molding.
"Naturally Occurring Inorganic Material" means an inorganic material that is found in nature, for example, volcanic ash and calcium carbonate.
"Polymeric Matrix" means a melt processable polymeric material or resin.
"Reclaimed Polymeric Material" means material resulting from a recycling or reclamation process, such as for example, hydropulping waste streams, that contain a mix of polymer, or polymers, and in some embodiments, cellulosic material.
"Viscoelastic Characteristic" means characteristics of materials that exhibit both viscous and elastic properties when subjected to deformation.

The above summary is not intended to describe each disclosed embodiment or every implementation. The detailed description that follows more particularly exemplifies illustrative embodiments.

### DESCRIPTION OF THE DRAWINGS

FIG. 1 is a schematic of a thermal compression process suitable for practicing various embodiments of the disclosure; and
FIG. 2 is a segmented view of a multilayered article of one embodiment.

### DETAILED DESCRIPTION

The invention is directed at:.

A panel comprising a substrate derived from thermal compression bonding particulates or pellets of a polymeric material, wherein the polymeric material is a reclaimed polymeric material from a hydropulping process and is optionally combined with a filler having a length:width-aspect ratio of at least 2:1, such as glass fibers.

Preferably, the panel is defined by:
(a) further comprising a lightweight filler, wherein the lightweight filler is expanded volcanic ash, perlite, pumice, cenospheres, glass microspheres, ceramic microspheres, polymeric microspheres, foamed polymeric beads, cellulosic fiber, or combination thereof; and/or
(b) the substrate further comprises one or more of an inorganic filler, organic filler, a coupling agent, a desiccant, a lubricant, or an antimicrobial; and/or
(c) the substrate comprises a filler having a length:width-aspect ratio of at least 2:1 that does not possess viscoelastic characteristics under the conditions utilized to melt process a filled polymeric matrix, and a lightweight filler, being an organic or inorganic material with a specific gravity of less than 0.7 g/cm³, which does not possess viscoelastic characteristics under the conditions utilized to melt process a filled polymeric matrix, and wherein the substrate exhibits one or more of a specific gravity of about 0.5 to 1.6 g/cm³, a coefficient of thermal expansion of less than 70 µm/m/K, a thermal expansion of less than 0.5% according to the Thermal Expansion Test Method as disclosed in the description, and a water absorption of less than 10 % as indicated after submersion in water for twenty-four hours at room temperature; and/or
(d) a flexural modulus, a coefficient of thermal expansion, or an impact strength of the substrate in a machine direction is within at least 30% of a flexural modulus, a coefficient of thermal expansion, or an impact strength of the substrate in a transverse machine direction.

Preferably, the panel is a multilayered panel, wherein the substrate comprises a filler having a length:width-aspect ratio of at least 2:1 that does not possess viscoelastic characteristics under the conditions utilized to melt process a filled polymeric matrix, and a lightweight filler, being an organic or inorganic material with a specific gravity of less than 0.7 g/cm³, which does not possess viscoelastic characteristics under the conditions utilized to melt process a filled polymeric matrix, and the panel comprises a second layer bonded to a surface of the substrate, wherein preferably the second layer comprises an aesthetic layer, a reinforcing layer, a sound dampening layer, an adhesive layer, a bondable layer, a support layer, a printable layer, polymeric layer, reflective layer, or combinations thereof. Further preferred, this multilayered panel is defined by:
(a) further comprising an aesthetic layer, a reinforcing layer, a sound dampening layer, an adhesive layer, a bondable layer, a support layer, a printable layer, polymeric layer, or reflective layer bonded to a surface of the substrate opposite the second layer;
   or
(b) the second layer is bonded to the substrate with a hot melt adhesive, pressure sensitive adhesive or curable adhesive; or
(c) further comprising a bondable layer positioned between the substrate and the aesthetic layer; preferably wherein the bondable layer includes functional polymers and functional polyolefins; or
(d) further comprising a support layer bonded between the substrate and the aesthetic layer, wherein the support layer is cork, cork composites, polymeric layer, metalized polymeric layer, reflective layer, print receptive layer or combinations thereof; or
(e) the second layer comprises a reinforcement layer having a honeycomb structure, a foam structure, a filled honeycomb structure, a filled polymeric composite structure, or combinations thereof; or
(f) the substrate exhibits at least two of flexural modulus of greater than 700 MPa, a notched impact strength of at least 300 J/m, a tensile elongation of at least 4%, substrate a thermal expansion of less than 0.5% according to the Thermal Expansion Test Method as disclosed in the description, and a coefficient of thermal expansion of less than 70 µm/m/K; or
(g) a flexural modulus of the substrate in a machine direction is within at least 30% of a flexural modulus of the substrate in a transverse machine direction; or
(h) a coefficient of thermal expansion of the substrate in a machine direction is within at least 30% of a coefficient of thermal expansion of the substrate in a transverse machine direction; or
(i) an impact strength of the substrate in the machine direction is within at least 30% of an impact strength of the substrate in a transverse machine direction.

As an alternative, the multilayered panel is a flooring segment, wherein preferably the flooring segment has opposing edge surfaces with each edge surface having a profile, wherein one edge surface has a connecting profile and the opposite edge surface has a receiving profile.

In a further embodiment of the multilayered panel, the panel further comprises multiple flooring segments, each having opposing edge surfaces with each edge surface having a profile, wherein one edge surface has a connecting profile and the opposite edge surface has a receiving profile, and wherein the connecting profile of a first flooring segment fits into the receiving profile of a second flooring segment.

In another embodiment, the panel of the invention comprises a filler having a length:width-aspect ratio of at least 2:1 that does not possess viscoelastic characteristics under the conditions utilized to melt process a filled polymeric matrix, and a lightweight filler, being an organic or inorganic material with a specific gravity of less than 0.7 g/cm³, which does not possess viscoelastic characteristics under the conditions utilized to melt process a filled polymeric matrix, which panel is obtained by preparing a blend in the form of particulates or pellets of said reclaimed polymeric material, said filler, and said lightweight filler and scattering or coating said blend and processing it into a panel by using a continuous double belt press process, wherein no melt processing step is performed prior to sheet or panel production. In the embodiment, the panel preferably further comprises one or more of an inorganic filler, an organic filler, a coupling agent, a desiccant, a lubricant, an antimicrobial or combinations thereof.

The invention also refers to a method for preparing a panel of the invention, wherein the method comprises thermal compression bonding, comprising
(A) thermal compression bonding a polymeric material from a hydropulping process to form a substrate, and bonding a second layer to a surface of the substrate to form a multilayered panel; or
(B) (a) scattering onto a first rotating belt a polymeric material from a hydropulping process, and
(b) thermal compression bonding the composite between the first rotating belt with a second rotating belt to form a substrate.

A preferred method is defined by:
(a) the composite is co-scattered with another polymeric material, and upon thermal compression bonding forms a multilayered substrate, wherein the method preferably includes bonding a second layer to a surface of the substrate to form a multilayered panel, preferably wherein the second layer comprises an aesthetic layer, a reinforcing layer, a sound dampening layer, an adhesive layer, a bondable layer, a support layer, a printable layer, polymeric layer, reflective layer, or combinations thereof; and/or
(b) further comprising applying an adhesive composition that is formed as a layer on the substrate; and/or
(c) further comprising surface treating the substrate, preferably, wherein treating comprises plasma treatment, silane treatment, heat treatment, corona treatment, or combinations thereof; and/or
(d) further comprising bonding an aesthetic layer, a reinforcing layer, a sound dampening layer, an adhesive layer, a bondable layer, a support layer, a printable layer, polymeric layer, reflective layer, or combinations thereof to the substrate.

Various optional fillers can be added to tailor the properties of the polymeric composite. Individual components or the components in composite form, whether as particulates or pellets, can be thermally compressed into substrates, which can be converted into panels and other embodiments that require sufficient mechanical strength and physical characteristics. In certain embodiments, the panel may be utilized as one layer in a multilayered article.

The panel may be derived from a reclaimed polymeric material. Various optional fillers can also be added to tailor the physical properties as required. For example, in one embodiment, the composite is a reclaimed polymeric compound, a high aspect ratio filler and a lightweight filler. The reclaimed polymeric material may be a material resulting from a recycling or reclamation process that contains a mix of polymer, or polymers, and, in certain embodiments, cellulosic material having a high aspect ratio. One example is the hydropulping process used primarily for recovering cellulosic material from plastic coated paper products. The reclaimed polymeric material may be included in the composite in amounts up to 99 wt %.

Plastic coated paper products are commonly used in many applications, including those in the food industry. For example, milk or juice cartons, cups, trays, plates and other various other food service applications are common uses of plastic coated paper. Due to the paper content of the used material, recycling is very desirable to capture and reclaim the paper. As such, hydropulping processes are one method employed to recapture the desirable paper for reclamation. Hydropulping is the aggressive separation of plastic from a major portion of the paper through an aqueous process. The polymer content and type may vary widely in the collection and reclamation of the paper. The polymeric material resulting from the hydropulping process is considered scrap or a waste stream because it may contain various types of polymers along with some paper content, water from the process and other contaminants inherent to recycling processes. An example of a hydropulping process can be found in U.S. Pat. No. 5,351,895. Other examples of reclaimed waste plastic streams would include plastics captured from municipal waste, waste streams from agricultural films, plastic medical waste, plastic carpet waste, and other such plastic waste streams that are typically disposed of due to their inhomogeneous or contaminated nature. In certain applications, the waste streams are typically cleaned with water and contain residual moisture that can be problematic for developing useful substrates.

In some embodiments, the resulting reclaimed polymeric material is generally a non-homogenous compound that is considered a waste stream. The resulting reclaimed polymeric is difficult to consistently melt process because of its varying components and water content. The reclaimed polymeric material can generally be characterized as a polymer matrix with various filler levels and high moisture content. The reclaimed polymeric material may have a cellulosic material content of about 5 wt % to about 40 wt %. The moisture content may be in the range of about 0.2 wt % to about 10 wt %. The reclaimed polymeric material may not be well suited for consistent melt processing methods on its own.

The reclaimed polymeric material may be combined with fillers to achieve a desired end result. Embodiments, with an inorganic filler, an organic filler, a coupling agent, a desiccant, a lubricant, an antimicrobial or combinations thereof are all contemplated by this disclosure. The fillers may be combined with the reclaimed polymeric material to form a desired composite. Additionally, in certain embodiments, the fillers may be combined with the reclaimed polymeric compound, a high aspect ratio filler a lightweight filler and optionally additional fillers to obtain a composite possessing particularly desirable physical characteristics that render an end article very durable.

A high aspect ratio filler may be suitable in certain embodiments. High aspect ratio fillers are organic or inorganic materials having an aspect ratio of at least 2: 1 (length: width), and in some embodiments at least 4: 1. Non- limiting examples of high aspect ratio fillers include: volcanic ash, talc, mica, glass, montmorillonite clay, wollastonite, basalt, cellulosic fiber, glass fiber, aluminum fiber, steel fiber, carbon fiber and carbon nanotubes. In an alternative embodiment, the reclaimed polymeric material may already include a high aspect ratio filler. For example, reclaimed polymeric materials from a hydropulp process may contain cellulose with an aspect ratio greater than 2: 1. The high aspect ratio filler may be included in the composite in amounts of about 2 - 60 wt % of the composition, 10 - 50 wt %, or 15 - 40 wt %.

A lightweight filler may be employed to address the specific gravity and potentially the strength characteristics of the desired end use composite. The lightweight fillers are organic or inorganic material with a specific gravity of less than 0.7 g/cm³. In some embodiments, the specific gravity is less than 0.5 g/cm³, and in others less than 0.3 g/cm³. Non- limiting examples of lightweight fillers include expanded volcanic ash, perlite, pumice, cenospheres, glass microspheres, ceramic microspheres, polymeric microspheres, foamed polymer beads, cellulosic fibers or combinations thereof. The lightweight filler may be included in the composite in amounts of about 0.5 - 40 wt % of the composition, 2 - 35 wt %, or 5 - 30 wt %. Expanded volcanic ash or cellulosic fibers may be particularly desirable for certain embodiments.

The combination of a reclaimed polymeric material, a lightweight filler, a high aspect ratio filler and optionally other organic and inorganic fillers are well suited for particular applications. This is especially true in applications where the composite materials are used to generate a low cost, moisture resistant and durable substrate suitable for uses such as flooring panels. The noted combination of materials can be thermal compression bonded into such substrates.

In alternative embodiments, a desiccant is added to the reclaimed polymeric material to address melt processing issues caused often by moisture or to enable the formation of pellets for subsequent panel formation. One function of the desiccant is to tie up the moisture in the reclaimed polymeric compound. The desiccant may be any conventional material capable of moisture uptake, and suitable for application in melt processed polymeric matrices. In one embodiment, the desiccant is selected from calcium oxide, magnesium oxide, strontium oxide, barium oxide, aluminum oxide, or combinations thereof. Those of ordinary skill in the art of melt processing polymers are capable of selecting a specific desiccant to achieve beneficial results. The amount of desiccant will vary, but may include a range of about 1 to 80 wt % of the formulation.

In certain embodiments, an inorganic material may be included as a filler with the reclaimed polymeric material prior to or during processing. Inorganic fillers may include such materials as calcium carbonate or talc. Additionally, any naturally occurring inorganic material may be suitable for the formation of the polymeric composite. Some embodiments incorporate volcanic ash, mica, fly ash, andesiteic rock, feldspars, aluminosilicate clays, obsidian, diatomaceous earth, silica, silica fume, bauxite, geopolymers pumice, perlite, pumicsite and combinations thereof. The various forms of volcanic ash are well suited for many end use applications. In one embodiment, the inorganic material is chosen such that it has an aspect ratio of at least 1.5:1 (length:width), at least 3: 1, or at least 5: 1. In some embodiments, the inorganic material comprises 5 - 80 wt % of the composition, 20 - 70 wt %, or 30 -60 wt %.

Organic materials may also be used as fillers in the composite materials. Various types of organic compounds conventionally recognized by those of ordinary skill in the art may be combined with the reclaimed polymeric material and optional fillers. In some embodiments, cellulosic materials may be utilized in melt processable compositions as fillers to impart specific physical characteristics or to reduce cost of the finished composition. Cellulosic materials generally include natural or wood based materials having various aspect ratios, chemical compositions, densities, and physical characteristics. Non-limiting examples of cellulosic materials include wood flour, wood fibers, sawdust, wood shavings, newsprint, paper, flax, hemp, rice hulls, grain hulls, kenaf, jute, sisal, nut shells, or combinations thereof. Combinations of cellulosic materials and a modified polymer matrix may also be used in the melt processable composition.

In another aspect, the composition may include coupling agents to improve the compatibility and interfacial adhesion between the reclaimed polymeric composite and any inorganic materials or other fillers. Non-limiting examples of coupling agents include functionalized polymers, organosilanes, organotitanates and organozirconates. Preferred functionalized polymers included functionalized polyolefms, included maleated polyolefms, polyethylene-co-vinyl acetate, polyethylene-co-acrylic acid, and polyethylene-co-acrylic acid salts.

In yet another embodiment, the composition may contain other additives. Non-limiting examples of conventional additives include antioxidants, light stabilizers, fibers, blowing agents, foaming additives, antiblocking agents, heat stabilizers, impact modifiers, biocides, compatibilizers, flame retardants, plasticizers, tackifiers, colorants, processing aids, lubricants, adhesion promoting agents and pigments. The additives may be incorporated into the composition in the form of powders, pellets, granules, or in any other form suitable for mixing. The amount and type of conventional additives in the composition may vary depending upon the scope of mixing, extrudable compounds and the desired physical properties of the finished composition. Those skilled in the art of mixing and melt processing are capable of selecting appropriate amounts and types of additives to match with a specific polymeric matrix in order to achieve desired physical properties of the finished material. In certain embodiments, blowing agents and foaming additives may be particularly desirable to control characteristics of the end use articles, such as for example, the coefficient of thermal expansion.

The composition can be prepared by any of a variety of ways. For example, the reclaimed polymeric compound and the optional components may be combined together by any of the blending means usually employed in the plastics industry, such as an extruder, a compounding mill, a Banbury mixer, pulverizer, an agglomerator or other such mixing equipment. The materials may be used in various forms, for example, a powder, a pellet, or a granular product. The mixing operation may be conveniently carried out at a temperature above the melting point or softening point of the processing additive, though it is also feasible and sometimes preferable to dry-blend the components in the solid state as particulates and to directly utilize the dry blends for subsequent sheet formation. The resulting mixtures can be either extruded directly into the form of the final product shape or pelletized or otherwise comminuted into a desired particulate size or size distribution for subsequent processing.

Subsequent melt-processing typically is performed at a temperature from 120 °C to 300 °C, although optimum operating temperatures are selected depending upon the melting point, melt viscosity, and thermal stability of the composition.

The resulting polymeric composite is durable, moisture resistant, bondable, and possesses a low thermal expansion coefficient. In some embodiments, the polymeric composite may exhibit at least two of flexural modulus of greater than 700 MPa, a notched impact strength of at least 300 J/m, a tensile elongation of at least 4%, and a coefficient of thermal expansion of less than 70 µm/m/K. The polymeric composite exhibits a specific gravity of about 0.9 to 1.6 g/cm³, about 0.7 to 1.2 g/cm³, or about 0.5 to 1.0 g/cm³ In some embodiments, the polymeric composite exhibits a water absorption of less than 10% as indicated after submersion in room temperature water for twenty four hours. In other embodiments, water absorption is less than 5% under the noted test standard.

In another embodiment, a dry blend of the components may be processed directly in a thermal compression process, such as, for example, those processes embodied in this disclosure. In certain embodiments it may be desirable for the reclaimed polymer to be ground into a fine particle size. The components can be blended using conventional blending equipment, including a ribbon blender, v-blender or any blending equipment that can produce a uniform particulate dispersion of the components. The dry blend can be scattered or coated and processed into sheet articles using a continuous double belt press as described in this disclosure. This embodiment has the advantage in that no melt processing step is required prior to sheet or panel production.

Thermal compression bonding advantageously utilizes the polymeric composite in pellet form to create a panel that has desirable features.

A continuous double belt press may be used as a thermal compression manufacturing process. Unlike conventional polymer thermal processing methods such as extrusion and injection molding, the continuous double belt press process does not require precise melt state properties to create the resultant panel or sheet. Because the continuous double belt press does not require the compounded polymer to fill a die or mold to create its shape, it is uniquely suited to handle inhomogeneous materials, such as the polymeric composite of this disclosure derived from the reclaimed polymeric material. The continuous double belt press is capable of achieving this result because it only requires the compounded material to melt slightly during its process and effectively bonds the pellets together while minimizing voids under heat and pressure to form a substrate. This process enables the non-homogenous and often varying composition of the reclaimed polymeric material used as the primary feedstock to be effectively melt processed into a board composition in widths up to 3 meters, thicknesses ranging from 2mm to 12mm, and effectively infinite lengths.

In one particular embodiment, a method is initiated by scattering pellets of a polymeric composite onto a first rotating belt. The polymeric composite may be derived from (i) a reclaimed polymeric material or polymer, and (ii) a lightweight filler. Thermal compression bonding the pellets then takes place between the first rotating belt with a second rotating belt to form a substrate.

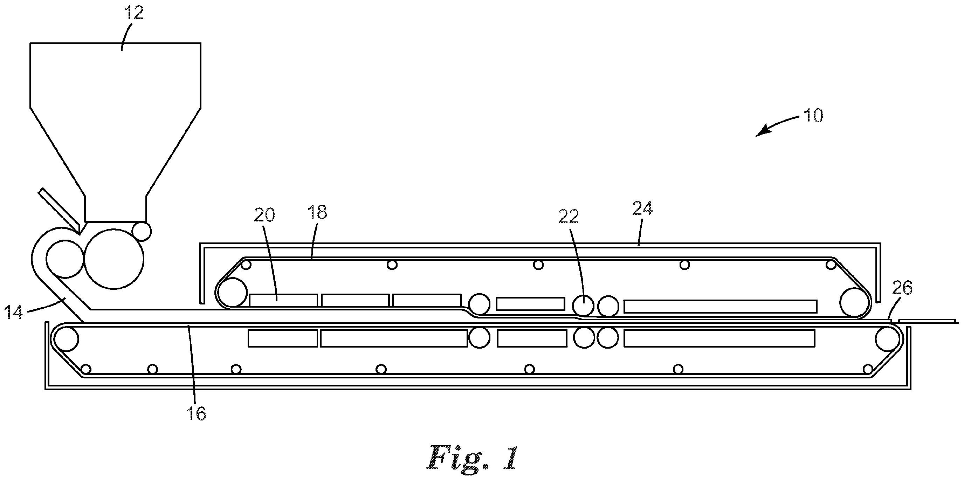

A schematic of a continuous double belt process 10 is depicted in FIG 1. A pellet scattering device 12 is employed to spread the desired polymeric composite as pellets 14 onto an extended lower belt 16. An upper belt 18 comes into contact with the scattered pellets 14 on the lower belt 16 near a heating zone 20. The heat melts or partially melts the pellets 14 and bonds them together (not shown). Nip rolls 22 apply compressive forces to assist in the processing of the pellets 14 to a panel 26 of indefinite length and may help orient high aspect ratio fillers to impart useful properties. An annealing zone 24 is used to finalize the process before the panel exits from belts 16 and 18. Such an apparatus is available from TechnoPartner Samtronic GmbH of Goppingen, Germany. Upon take off of the panel of indefinite length from the continuous double belt press, the panels are divided into smaller sections for end use applications.

The resulting panel or sheets of the thermally compressed polymeric composite may be employed for a variety of end use applications in part due to their physical and chemical characteristics. The polymeric composite is durable, moisture resistant, bondable, and possesses a low thermal expansion coefficient. In some embodiments, the polymeric composite may exhibit at least two of flexural modulus of greater than 700 MPa, a notched impact strength of at least 300 J/m, a tensile elongation of at least 4%, and a coefficient of thermal expansion of less than 70 µm/m/K. The polymeric composite exhibits a specific gravity of about 0.5 to 1.6 g/cm³. The polymeric composite exhibits a resistance to moisture as demonstrated by a water uptake of less than 10 wt % after immersion in water for twenty four hours.

Another method useful in determining the resulting panels' relevant characteristics is the Thermal Expansion Test Method. The method requires a square sample of a panel measured in both the X and Y dimension at room temperature (25 °C) using a micrometer. The samples are then subsequently placed in a laboratory oven set to 70 °C. After 1 hour, the samples are removed from the oven and immediately measured using a micrometer in the X and Y dimensions. The percent expansion is subsequently determined from these two measurements. Certain substrates contemplated by this disclosure have a thermal expansion of less than 0.5%, or less than 0.35%, according to the Thermal Expansion Test Method.

In certain embodiments, sheet articles produced using a thermal compression process may be highly isotropic. When sheet articles are produced using conventional melt processing techniques (e.g., sheet extrusion, injection molding), the resultant articles are highly anisotropic and typically have marked differences in mechanical properties in the direction of material flow (machine direction, or MD) versus the transverse direction of material flow (transverse machine direction, or TD). It is not uncommon for mechanical properties (e.g., flexural, tensile, impact, CTE) to differ by more than 50 % in the MD versus TD of a sheet article. This artifact may be attributed is a result of residual stress in the material and alignment of polymer chains and fillers in the machine direction. Surprisingly, sheet articles made using a thermal compression process can be highly isotropic. In some cases, the mechanical properties for the MD vs. TD in an article produced using a thermal compression process are within 30% of each other. In another embodiment, they are within 20%, and yet in some further embodiments they are within 10%.

The resulting panels generated from the thermal compression of the polymeric composite can be used for various applications. Non-limiting examples include a flooring substrate, a roofing panel, a marine panel, a concrete form, a wall panel, a door panel, an automotive panel, an aerospace panel or a signage panel. Those of ordinary skill in the art will recognize that the unique properties enable many applications. Additionally, the article constructed from the panels may include indicia applied to a surface of the panel.

The panels may be used to create multilayered articles. The panels used to create the multilayer articles may be on the interior or the exterior of the multilayer construction. For example, the panel may serve as one or more layers of a multilayered article. In one embodiment, the multilayered article is constructed of a sheet derived from thermal compression bonding a reclaimed compound or a polymeric matrix. An aesthetic layer is then bonded to a surface of the panel to form the multilayered article. In another embodiment, a structural reinforcement layer is bonded to the panel to provide additional structural integrity. In another embodiment a structural layer is included between two panels of the invention to form a so-called sandwich construction. Those of ordinary skill in the art recognize that various distinct or different layers may be attached or bonded to the resulting panels depending upon the intended end use. Additionally, a co-scattering technique may be employed in a thermal compression bonding processes to form such multilayered articles. Those of ordinary skill in the art with knowledge of this disclosure will recognize that certain multilayered articles will be best suited with materials with coefficient of thermal expansion value substantially similar.

A wide variety of polymers conventionally recognized in the art as suitable for melt processing are useful as the polymeric matrix with the lightweight filler to create a panel that is capable of forming the multilayered article. They include both hydrocarbon and non-hydrocarbon polymers. Examples of useful polymeric matrices include, but are not limited to, polyamides, polyimides, polyurethanes, polyolefms, polystyrenes, polyesters, polycarbonates, polyketones, polyureas, polyvinyl resins, polyacrylates and polymethylacrylates and mixtures thereof. Such materials are well suited for thermal compression bonding applications.

The multilayered article may optionally include bonding layers, adhesives, or coupling agents to assist in bonding another material to the panel. The bonding layers, adhesives or coupling agents can be formed as a layer on the panel. Bondable layers include functional polymers and more preferably functional polyolefms. Adhesives includes hot melt adhesives, pressure sensitive adhesives or curable adhesives. Coupling agents include the same compounds disclosed for use in the formation of the polymeric composite. Coupling agents may be incorporated directly in the panel composition.

In one embodiment, the bonding material is applied as an additional layer during thermal compression process. For example, with a continuous double belt press, a second scattering device can be used to apply the second layer onto the primary layer of the polymeric composite.

In an alternative embodiment, the panels may be treated to enable bonding or attachment of additional layers to create the multilayered article. Non-limiting examples of such methods known in the art include plasma treatment, corona treatment, silane treatment, use of primer materials or heat treatment.

Some embodiments of the multilayered article include a support layer bonded to the substrate. A wide variety of materials can be used as the support layer. Cork is one non-limiting example of a support layer. Other non-limiting examples include a polymeric layer, a metalized polymeric layer, a reflective layer, a sound dampening layer, a print receptive layer, a durable layer or combinations thereof. The support layer can be applied onto either side of the panel and may be placed between the panel and the adhesive layer.

A reinforcement layer can also be used in certain embodiments. The reinforcement layer is used to provide additional structural integrity to the substrate for specific applications. The reinforcement layer can be a honeycomb structure, a foam structure, a filled honeycomb structure, a filled polymeric composite, a glass fabric, a polymeric fabric or combinations thereof. The reinforcement layer can be attached to the substrate using thermal lamination, conventional adhesives or bonding agents.

The various embodiments of this disclosure can be used in laminate flooring applications. Laminate flooring typically comprises three or four layers. Laminate flooring can be either glued to sub-flooring or installed as a floating floor. For floating flooring installation, the substrate layer of the tiles or planks are typically interlocked in a tongue and groove or click design to enable durability. Glued floors optionally include tongue and groove or click designs within the substrate. Such designs, while adding some cost, enable faster and less costly installation.

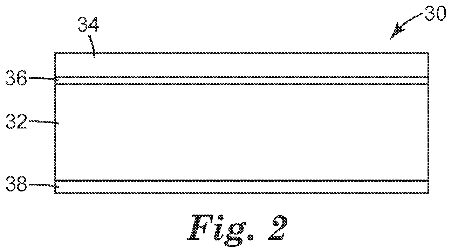

FIG. 2 is a segmented view of one embodiment particularly suited for use in laminate flooring applications. The construction depicted is intended as a laminated flooring panel 30. The flooring panel 30 includes a substrate 32 produced in accordance with this disclosure. The substrate 32 is bonded to an aesthetic layer 34. The substrate 32 may be bonded to the aesthetic layer 34 using an optional adhesive layer 36. An additional reinforcement layer 38 is bonded to an opposing side of the substrate 32 from the aesthetic layer 34. Various alternative embodiments are known in the industry and include cushioning layers, printable layers, and other layers that provide the necessary decorative and functional properties required for various applications, such as flooring.

In an alternative embodiment, a flooring segment constructed with the substrate made in accordance with this disclosure can have opposing edge surfaces with each edge surface having a profile. One of the edge surfaces can have a connecting profile and the opposite edge surface can have a receiving profile. This type of construction provides the interlocking mechanism or a tongue and groove design. With this embodiment, the connecting profile of first flooring segment fits into the receiving profile of a second flooring segment to enable tongue and groove or click designs.

The aesthetic layer bonded to the panel can comprise a broad range of natural or synthetic materials of varying durability and appearance. Thin laminates of natural materials such as wood, stone or toughened natural fibers composites are common decorative layers. For applications requiring greater durability or lower cost, synthetic materials are commonly used. Recent advances in printing and embossing technologies have resulted in synthetic decorative layers that are ever more realistic in their impression of natural wood and stone.

Interfacial bonding between the panel and any optional layers is a feature that may be addressed differently depending upon the specific materials employed for a selected construction. In some embodiments, an adhesive layer is required for laminate constructions. For example, polyurethane adhesives are broadly used for this layer as they are known to be durable and relatively easy to apply during assembly. Hot melt adhesives are also commonly used. While not particularly demanding in terms of structural strength requirements, the adhesive bond must last the lifetime of the laminate and be robust enough to withstand expansion differences, caused by moisture or temperature changes within the two substrates.

The substrate layer or panel is typically thicker than the aesthetic layer and enables the flooring to be mechanically robust, hide imperfections in the subfloor, resist moisture, and be bondable to the subflooring if needed. The panel provides the necessary stiffness, ability to be grooved for the integration of interlocking mechanisms, and are readily bonded with standard adhesive products.

An optional reinforcement layer is sometimes used in thinner laminate constructions or constructions requiring adhesive to difficult to bond sub -floors. Thinner constructions inherently lack the required mechanical stability and the reinforcement layer provides the needed strength and durability. Fiberglass or woven glass mesh is commonly used backing material for this optional layer. This layer can also be designed to better enable adhesive properties to difficult to bond sub-floorings.

Certain embodiments possess desirable attributes for use in a flooring substrate, a roofing panel, a marine panel, a concrete form, a wall panel, a door panel, an automotive panel, an aerospace panel or a signage panel.

### EXAMPLES (not claimed)

**Table 1. MATERIALS**

| MATERIAL | DESCRIPTION |
|---|---|
| Reclaimed Polymer | Recycled LDPE. commercially available from AERT. Inc (Springdale, AR) |
| PP | Profax 6301. polypropylene. commercially available from LyondellBasell Corp. (Houston, TX) |
| Filler I | Dry volcanic ore, commercially available from Kansas Minerals, Inc. (Mankato, KS) |
| Filler 2 | Calcium Carbonate, GLC1012C, commercially available from Great Lakes Calcium (Green Bay, W1) |
| Filler 3 | 120 mesh maple wood fiber, commercially available from American Wood Fibers (Schofield, WI) |
| Filler 4 | EC14/738 4mm Thermoflow 738 glass fibers, commercially available from Johns Manville Corp. (Waterville, OH) |
| Lightweight Filler | Kamco 5, Expanded Volcanic Ash. commercially available from Kansas Minerals, lite, (Mankato, KS) |
| Desiccant | Polycal OFT15 calcium oxide, commercially available from Mississippi Lime (St Louis, MO) |
| Lubricant | Drakcol 600. commercially available Calumet Specialty Products (Indianapolis, IN) |

### PREPARATION OF EXAMPLES 1-2.

Composite sheet sample examples 1 and 2 were prepared and tested using the following protocol. Flake PP, filler and additives were dry blended in a large polyethylene bag. The resulting materials were continuously compression molded into a sheet having a thickness of approximately 3.0 mm and a width of 1200 mm using a double belt press commercially available from TechnoPartner Samtronic (Goppingen, Germany). The samples were processed at 200 °C for all heating zones and 70 °C for the cooling zones. The line speed was 1.0 m/min. The resulting sheet samples were machined into 300 mm x 300 mm test specimens. Thermal Expansion Test Method was used to determine the percent expansion. 15 cm x 15 cm samples of the panel were measured in both the X and Y dimension at room temperature (25 °C) using a micrometer. The samples were subsequently placed in a laboratory oven that was set to 70 °C. After 1 hour, the samples were removed from the oven and immediately measured using a micrometer in the X and Y dimensions. The percent expansion was subsequently determined from these two measurements. The moisture uptake was also determined for each formulation. To do so, the mass of approximately 15 cm x 15 cm samples were first measured. The samples were subsequently placed in a water batch at room temperature. After 24 hours, the samples were removed from the bath, blotted dry with a paper towel to remove surface moisture and weighed. The % moisture uptake was subsequently determined from these measurements. Specific Gravity was determined for all samples using Archimedes Method. The resulting properties of examples 1 and 2 are reported in Table 2.

### PREPARATION OF EXAMPLES 3-11.

Examples 3-11 were prepared in an identical fashion to Examples 1-2 with the exception that after samples 3-11 were dry blended, they were subsequently formed into test specimens by compression molding in a Dake compression molding press (Commercially available from Dake, Inc., Grand Haven, MI). Samples were pressed in this apparatus for 5 minutes at 200 °C and 5 tons of pressure. The resulting samples were trimmed using a band saw to samples approximately 7.5 cm x 7.5 cm and tested for thermal expansion and moisture uptake as specified previously.

**Table 2. Experimental Formulations for Examples 1-2**

| **Sample** | **PP** | **Filler I** | **Lightweight Filler** | **Lubricant** |
|---|---|---|---|---|
| 1 | 58 | 30 | 5 | 2 |
| 2 | 58 | 25 | 10 | 2 |

**Table 3. Experimental Formulations for Exampli**

| **Sample** | **Reclaimed Polymer** | **Filler 1** | **Filler 2** | **Filler 3** | **Filler 4** | **Filler Lightweight** | **Desiccant** |
|---|---|---|---|---|---|---|---|
| 3 | 96.5 | - | | | | 2.5 | 1 |
| 4 | 94 | | | | | 5.0 | 1 |
| 5 | 79 | | | | | 20 | 1 |
| 6 | 69 | | | | | 30 | 1 |
| 7 | 69 | 25 | | | | 5 | 1 |
| 8 | 59 | 25 | | 10 | | 5 | 1 |
| 9 | 69 | 20 | | 5 | | 5 | 1 |
| 10 | 59 | | 35 | | | 5 | 1 |
| II | 59 | 35 | | | | 5 | 1 |

**Table 4. Physical Properties of Examples 1-11**

| **Sample** | **Thermal Expansion (%)** | **Moisture Uptake (%)** | **Specific Gravity (g/cm³)** |
|---|---|---|---|
| 1 | 0.23 | 0.0 1 | 1.04 |
| 2 | 0.18 | 0.02 | 0.98 |
| 3 | 0.49 | 0.10 | 0.94 |
| 4 | 0.41 | 0.16 | 0.86 |
| 5 | 0.20 | 13.2 | 0.65 |
| 6 | 0.06 | 42.4 | 0.49 |
| 7 | 0.26 | 9.7 | 1.04 |
| 8 | 0.12 | 9.06 | 1.10 |
| 9 | 0.28 | 1.47 | 1.02 |
| 10 | 0.30 | 11.3 | 1.10 |
| 11 | 0.27 | 20.2 | 1.10 |

## Claims

1. A panel comprising a substrate derived from thermal compression bonding particulates or pellets of a polymeric material, wherein the polymeric material is a reclaimed polymeric material from a hydropulping process and is optionally combined with a filler having a length:width-aspect ratio of at least 2:1, such as glass fibers.

2. The panel according to claim 1,
(a) further comprising a lightweight filler, wherein the lightweight filler is expanded volcanic ash, perlite, pumice, cenospheres, glass microspheres, ceramic microspheres, polymeric microspheres, foamed polymeric beads, cellulosic fiber, or combination thereof; and/or
(b) wherein the substrate further comprises one or more of an inorganic filler, organic filler, a coupling agent, a desiccant, a lubricant, or an antimicrobial; and/or
(c) wherein the substrate comprises a filler having a length:width-aspect ratio of at least 2:1 that does not possess viscoelastic characteristics under the conditions utilized to melt process a filled polymeric matrix, and a lightweight filler, being an organic or inorganic material with a specific gravity of less than 0.7 g/cm³, which does not possess viscoelastic characteristics under the conditions utilized to melt process a filled polymeric matrix, and wherein the substrate exhibits one or more of a specific gravity of about 0.5 to 1.6 g/cm³, a coefficient of thermal expansion of less than 70 µm/m/K, a thermal expansion of less than 0.5% according to the Thermal Expansion Test Method as disclosed in the description, and a water absorption of less than 10 % as indicated after submersion in water for twenty-four hours at room temperature; and/or
(d) a flexural modulus, a coefficient of thermal expansion, or an impact strength of the substrate in a machine direction is within at least 30% of a flexural modulus, a coefficient of thermal expansion, or an impact strength of the substrate in a transverse machine direction.

3. The panel according to claim 1, which is a multilayered panel, wherein the substrate comprises a filler having a length:width-aspect ratio of at least 2:1 that does not possess viscoelastic characteristics under the conditions utilized to melt process a filled polymeric matrix, and a lightweight filler, being an organic or inorganic material with a specific gravity of less than 0.7 g/cm³, which does not possess viscoelastic characteristics under the conditions utilized to melt process a filled polymeric matrix, and the panel comprises a second layer bonded to a surface of the substrate, wherein preferably the second layer comprises an aesthetic layer, a reinforcing layer, a sound dampening layer, an adhesive layer, a bondable layer, a support layer, a printable layer, polymeric layer, reflective layer, or combinations thereof.

4. The multilayered panel according to claim 3,
(a) further comprising an aesthetic layer, a reinforcing layer, a sound dampening layer, an adhesive layer, a bondable layer, a support layer, a printable layer, polymeric layer, or reflective layer bonded to a surface of the substrate opposite the second layer; or
(b) wherein the second layer is bonded to the substrate with a hot melt adhesive, pressure sensitive adhesive or curable adhesive; or
(c) further comprising a bondable layer positioned between the substrate and the aesthetic layer; preferably wherein the bondable layer includes functional polymers and functional polyolefins; or
(d) further comprising a support layer bonded between the substrate and the aesthetic layer, wherein the support layer is cork, cork composites, polymeric layer, metalized polymeric layer, reflective layer, print receptive layer or combinations thereof; or
(e) wherein the second layer comprises a reinforcement layer having a honeycomb structure, a foam structure, a filled honeycomb structure, a filled polymeric composite structure, or combinations thereof; or
(f) wherein the substrate exhibits at least two of flexural modulus of greater than 700 MPa, a notched impact strength of at least 300 J/m, a tensile elongation of at least 4%, substrate a thermal expansion of less than 0.5% according to the Thermal Expansion Test Method as disclosed in the description, and a coefficient of thermal expansion of less than 70 µm/m/K; or
(g) wherein a flexural modulus of the substrate in a machine direction is within at least 30% of a flexural modulus of the substrate in a transverse machine direction; or
(h) wherein a coefficient of thermal expansion of the substrate in a machine direction is within at least 30% of a coefficient of thermal expansion of the substrate in a transverse machine direction; or
(i) wherein an impact strength of the substrate in the machine direction is within at least 30% of an impact strength of the substrate in a transverse machine direction.

5. The panel of claim 3 which is a flooring segment.

6. The panel according to claim 5, wherein the flooring segment has opposing edge surfaces with each edge surface having a profile, wherein one edge surface has a connecting profile and the opposite edge surface has a receiving profile.

7. The panel according to claim 3, further comprising multiple flooring segments, each having opposing edge surfaces with each edge surface having a profile, wherein one edge surface has a connecting profile and the opposite edge surface has a receiving profile, and wherein the connecting profile of a first flooring segment fits into the receiving profile of a second flooring segment.

8. The panel according to claim 1, wherein the substrate comprises a filler having a length:width-aspect ratio of at least 2:1 that does not possess viscoelastic characteristics under the conditions utilized to melt process a filled polymeric matrix, and a lightweight filler, being an organic or inorganic material with a specific gravity of less than 0.7 g/cm³, which does not possess viscoelastic characteristics under the conditions utilized to melt process a filled polymeric matrix, which panel is obtained by preparing a blend in the form of particulates or pellets of said reclaimed polymeric material, said filler, and said lightweight filler and scattering or coating said blend and processing it into a panel by using a continuous double belt press process, wherein no melt processing step is performed prior to sheet or panel production.

9. The panel according to claim 8, further comprising one or more of an inorganic filler, an organic filler, a coupling agent, a desiccant, a lubricant, an antimicrobial or combinations thereof.

10. A method for preparing a panel of claim 1, wherein the method comprises thermal compression bonding, comprising
(A) thermal compression bonding a polymeric material from a hydropulping process to form a substrate, and bonding a second layer to a surface of the substrate to form a multilayered panel; or
(B)
(a) scattering onto a first rotating belt a polymeric material from a hydropulping process, and
(b) thermal compression bonding the composite between the first rotating belt with a second rotating belt to form a substrate.

11. The method according to claim 10(A),
(a) wherein the composite is co-scattered with another polymeric material, and upon thermal compression bonding forms a multilayered substrate; and/or
(b) further comprising applying an adhesive composition that is formed as a layer on the substrate; and/or
(c) further comprising surface treating the substrate, preferably, wherein treating comprises plasma treatment, silane treatment, heat treatment, corona treatment, or combinations thereof; and/or
(d) further comprising bonding an aesthetic layer, a reinforcing layer, a sound dampening layer, an adhesive layer, a bondable layer, a support layer, a printable layer, polymeric layer, reflective layer, or combinations thereof to the substrate.

12. The method according to claim 10(A), wherein the method includes bonding a second layer to a surface of the substrate to form a multilayered panel, preferably wherein the second layer comprises an aesthetic layer, a reinforcing layer, a sound dampening layer, an adhesive layer, a bondable layer, a support layer, a printable layer, polymeric layer, reflective layer, or combinations thereof.

## Patentansprüche

1. Platte, umfassend ein Substrat, das durch Thermokompressionsverbinden von Partikeln oder Pellets aus einem polymeren Material erhalten wird, wobei das polymere Material ein wiedergewonnenes polymeres Material aus einem Wasseraufschluss-Verfahren (Engl.: hydropulpling process) ist und gegebenenfalls mit einem Füllstoff mit einem Länge: Breite-Aspektverhältnis von mindestens 2:1, wie Glasfasern, kombiniert ist.

2. Platte gemäß Anspruch 1,
(a) weiterhin umfassend einen Leichtgewicht-Füllstoff, wobei der Leichtgewicht-Füllstoff expandierte vulkanische Asche, Perlit, Bimsstein, Cenosphären, Glas-Mikrokugeln, keramische Mikrokugeln, polymere Mikrokugeln, geschäumte polymere Kügelchen, Cellulosefaser oder eine Kombination davon ist; und/oder
(b) wobei das Substrat weiterhin einen oder mehrere von einem anorganischen Füllstoff, organischen Füllstoff, einem Kopplungsmittel, einem Trocknungsmittel, einem Schmiermittel oder einem antimikrobiellen Mittel umfasst; und/oder
(c) wobei das Substrat einen Füllstoff mit einem Länge: Breite-Aspektverhältnis von mindestens 2:1 umfasst, der unter den Bedingungen, die zur Schmelzverarbeitung einer gefüllten Polymermatrix verwendet werden, keine viskoelastischen Eigenschaften aufweist, und einen Leichtgewicht-Füllstoff, der ein organisches oder anorganisches Material mit einer spezifischen Dichte von weniger als 0,7 g/cm³ ist, der unter den Bedingungen, die zur Schmelzverarbeitung einer gefüllten Polymermatrix verwendet werden, keine viskoelastischen Eigenschaften aufweist, und wobei das Substrat eine oder mehrere von einer spezifischen Dichte von etwa 0,5 bis 1,6 g/cm³, einem Wärmeausdehnungskoeffizienten von weniger als 70 µm/m/K, einer Wärmeausdehnung von weniger als 0.5 % nach dem in der Beschreibung angegebenen Wärmeausdehnungstestverfahren und eine Wasserabsorption von weniger als 10 %, die nach Eintauchen in Wasser für vierundzwanzig Stunden bei Raumtemperatur bestimmt wird, aufweist; und/oder
(d) wobei ein Biegemodul, ein Wärmeausdehnungskoeffizient oder eine Schlagzähigkeit des Substrats in einer Maschinenrichtung innerhalb von mindestens 30 % eines Biegemoduls, eines Wärmeausdehnungskoeffizienten oder einer Schlagzähigkeit des Substrats in einer quer zur Maschinenrichtung verlaufenden Richtung liegt.

3. Platte gemäß Anspruch 1, welches eine mehrschichtige Platte ist, wobei das Substrat einen Füllstoff mit einem Länge:Breite-Verhältnis von mindestens 2:1 umfasst, der unter den Bedingungen, die zur Schmelzverarbeitung einer gefüllten Polymermatrix verwendet werden, keine viskoelastischen Eigenschaften besitzt, und einen Leichtgewicht-Füllstoff, der ein organisches oder anorganisches Material mit einer spezifischen Dichte von weniger als 0,7 g/cm³ ist, das unter den Bedingungen, die zur Schmelzverarbeitung einer gefüllten Polymermatrix verwendet werden, keine viskoelastischen Eigenschaften besitzt, und die Platte eine zweite Schicht umfasst, die an eine Oberfläche des Substrats gebunden ist, wobei die zweite Schicht vorzugsweise eine ästhetische Schicht, eine verstärkende Schicht, eine schalldämpfende Schicht, eine Klebstoffschicht, eine verbindbare Schicht, eine Trägerschicht, eine bedruckbare Schicht, eine polymere Schicht, eine reflektierende Schicht oder Kombinationen davon umfasst.

4. Mehrschichtige Platte gemäß Anspruch 3,
(a) weiterhin umfassend eine ästhetische Schicht, eine verstärkende Schicht, eine schalldämpfende Schicht, eine Klebeschicht, eine verbindbare Schicht, eine Trägerschicht, eine bedruckbare Schicht, eine polymere Schicht oder eine reflektierende Schicht, die an eine Oberfläche des Substrats gegenüber der zweiten Schicht gebunden ist; oder
(b) wobei die zweite Schicht mit einem Heißschmelzklebstoff, druckempfindlichen Klebstoff oder aushärtbarem Klebstoff an das Substrat gebunden ist; oder
(c) weiterhin umfassend eine Klebeschicht, die zwischen dem Substrat und der ästhetischen Schicht angeordnet ist; wobei die Klebeschicht vorzugsweise funktionelle Polymere und funktionelle Polyolefine enthält; oder
(d) weiterhin umfassend eine Trägerschicht, die zwischen dem Substrat und der ästhetischen Schicht gebunden ist, wobei die Trägerschicht Kork, Korkkomposite, polymere Schicht, metallisierte polymere Schicht, reflektierende Schicht, druckaufnahmefähige Schicht oder Kombinationen davon ist; oder
(e) wobei die zweite Schicht eine Verstärkungsschicht mit einer Wabenstruktur, einer Schaumstruktur, einer gefüllten Wabenstruktur, einer gefüllten polymeren Verbundstruktur oder Kombinationen davon umfasst; oder
(f) wobei das Substrat mindestens zwei der Eigenschaften von einem Biegemodul von mehr als 700 MPa, einer Kerbschlagzähigkeit von mindestens 300 J/m, einer Zugdehnung von mindestens 4 %, einer Wärmeausdehnung des Substrats von weniger als 0,5 % gemäß dem Wärmeausdehnungstestverfahren, wie in der Beschreibung angegeben, und einem Wärmeausdehnungskoeffizienten von weniger als 70 µm/m/K aufweist; oder
(g) wobei ein Biegemodul des Substrats in einer Maschinenrichtung innerhalb von mindestens 30% eines Biegemoduls des Substrats in einer quer zur Maschinenrichtung verlaufenden Richtung liegt; oder
(h) wobei ein Wärmeausdehnungskoeffizient des Substrats in einer Maschinenrichtung innerhalb von mindestens 30% eines Wärmeausdehnungskoeffizienten des Substrats in einer quer zur Maschinenrichtung verlaufenden Richtung liegt; oder
(i) wobei eine Schlagfestigkeit des Substrats in Maschinenrichtung innerhalb von mindestens 30% einer Schlagfestigkeit des Substrats in einer quer zur Maschinenrichtung verlaufenden Richtung liegt.

5. Platte nach Anspruch 3, bei der es sich um ein Fußbodensegment handelt.

6. Platte gemäß Anspruch 5, wobei das Fußbodensegment gegenüberliegende Randflächen hat, wobei jede Randfläche ein Profil hat, wobei eine Randfläche ein Verbindungsprofil und die gegenüberliegende Randfläche ein Aufnahmeprofil hat.

7. Platte gemäß Anspruch 3, weiterhin umfassend mehrere Fußbodensegmente, die jeweils gegenüberliegende Randflächen aufweisen, wobei jede Randfläche ein Profil aufweist, wobei eine Randfläche ein Verbindungsprofil und die gegenüberliegende Randfläche ein Aufnahmeprofil aufweist, und wobei das Verbindungsprofil eines ersten Fußbodensegments in das Aufnahmeprofil eines zweiten Fußbodensegments passt.

8. Platte gemäß Anspruch 1, wobei das Substrat einen Füllstoff mit einem Länge: Breite-Aspektverhältnis von mindestens 2:1, der unter den Bedingungen, die zur Schmelzverarbeitung einer gefüllten Polymermatrix verwendet werden, keine viskoelastischen Eigenschaften besitzt, und einen Leichtgewicht-Füllstoff, der ein organisches oder anorganisches Material mit einem spezifischen Gewicht von weniger als 0,7 g/cm³ ist, der unter den Bedingungen, die zur Schmelzverarbeitung einer gefüllten Polymermatrix verwendet werden, keine viskoelastischen Eigenschaften besitzt, umfasst, wobei die Platte erhalten wird, indem eine Mischung in Form von Partikeln oder Pellets des wiedergewonnenen polymeren Materials, des Füllstoffs und des Leichtgewicht-Füllstoffs hergestellt wird und die Mischung unter Verwendung eines kontinuierlichen Doppelband-Pressverfahrens gestreut oder beschichtet und zu einer Platte verarbeitet wird, wobei vor der Herstellung von Schichten oder Platten kein Schmelzverarbeitungsschritt durchgeführt wird.

9. Platte gemäß Anspruch 8, weiterhin umfassend einen oder mehrere von einem anorganischen Füllstoff, einem organischen Füllstoff, einem Kopplungsmittel, einem Trocknungsmittel, einem Schmiermittel, einem antimikrobiellen Mittel oder Kombinationen davon.

10. Verfahren zur Herstellung einer Platte nach Anspruch 1, wobei das Verfahren Thermokompressionsverbinden umfasst, umfassend
(A) Thermokompressionsverbinden eines polymeren Materials aus einem Wasseraufschluss-Verfahren (Engl.: hydropulpling process) zur Bildung eines Substrats und Binden einer zweiten Schicht an die Oberfläche des Substrats zur Bildung einer mehrschichtigen Platte; oder
(B)
(a) Streuen eines polymeren Materials aus einem Wasseraufschluss-Verfahren auf ein erstes rotierendes Band, und
(b) Thermokompressionsverbinden des Komposits zwischen dem ersten rotierenden Band mit einem zweiten rotierenden Band zur Bildung eines Substrats.

11. Verfahren gemäß Anspruch 10(A),
(a) wobei das Komposit zusammen mit einem anderen polymeren Material gemeinsam gestreut wird und aufgrund Thermokompressionsverbindens ein mehrschichtiges Substrat bildet; und/oder
(b) weiterhin umfassend das Auftragen einer
Klebstoffzusammensetzung, die als eine Schicht auf dem Substrat gebildet wird; und/oder
(c) weiterhin umfassend das Oberflächenbehandeln des Substrats, vorzugsweise, wobei das Behandeln eine Plasmabehandlung, Silanbehandlung, Wärmebehandlung, Koronabehandlung oder Kombinationen davon umfasst; und/oder
(d) weiterhin umfassend das Verbinden einer ästhetischen Schicht, einer verstärkenden Schicht, einer schalldämpfenden Schicht, einer Klebeschicht, einer verbindbaren Schicht, einer Trägerschicht, einer bedruckbaren Schicht, einer polymeren Schicht, einer reflektierenden Schicht oder Kombinationen davon an das Substrat.

12. Verfahren gemäß Anspruch 10(A), wobei das Verfahren das Binden einer zweiten Schicht an eine Oberfläche des Substrats umfasst, um eine mehrschichtige Platte zu bilden, wobei die zweite Schicht vorzugsweise eine ästhetische Schicht, eine verstärkende Schicht, eine schalldämpfende Schicht, eine Klebeschicht, eine verbindbare Schicht, eine Trägerschicht, eine bedruckbare Schicht, eine polymere Schicht, eine reflektierende Schicht oder Kombinationen davon umfasst.

## Revendications

1. Panneau comprenant un substrat dérivé de particules ou de pastilles de liaison par compression thermique d'un matériau polymère, dans lequel le matériau polymère est un matériau polymère recyclé issu d'un procédé d'hydrodésintégration et est éventuellement combiné avec une charge ayant un rapport de forme longueur:largeur d'au moins 2:1, telle que des fibres de verre.

2. Panneau selon la revendication 1,
(a) comprenant en outre une charge légère, dans laquelle la charge légère est de la cendre volcanique expansée, de la perlite, de la pierre ponce, des cénosphères, des microsphères de verre, des microsphères céramiques, des microsphères polymères, des billes polymères expansées, de la fibre cellulosique ou une combinaison de celles-ci ; et/ou
(b) dans lequel le substrat comprend en outre un ou plusieurs parmi une charge inorganique, une charge organique, un agent de couplage, un dessiccant, un lubrifiant ou un antimicrobien ; et/ou
(c) dans lequel le substrat comprend une charge ayant un rapport de forme longueur:largeur d'au moins 2:1 qui ne possède pas de caractéristiques viscoélastiques dans les conditions utilisées pour traiter par fusion une matrice polymère chargée, et une charge légère, étant un matériau organique ou inorganique ayant une masse volumique inférieure à 0,7 g/cm³, qui ne possède pas de caractéristiques viscoélastiques dans les conditions utilisées pour traiter par fusion une matrice polymère chargée, et dans lequel le substrat présente un ou plusieurs d'une masse volumique d'environ 0,5 à 1,6 g/cm³, d'un coefficient de dilatation thermique inférieur à 70 µm/m/K, d'une dilatation thermique inférieure à 0,5 % selon la méthode d'essai de dilatation thermique telle que décrite dans la description, et d'une absorption d'eau inférieure à 10 % comme indiqué après immersion dans de l'eau pendant vingt-quatre heures à température ambiante ; et/ou
(d) un module d'élasticité en flexion, un coefficient de dilatation thermique ou une résistance aux chocs du substrat dans le sens machine ne dépasse pas 30 % au moins d'un module d'élasticité en flexion, d'un coefficient de dilatation thermique ou d'une résistance aux chocs du substrat transversalement au sens machine.

3. Panneau selon la revendication 1, qui est un panneau multicouche, dans lequel le substrat comprend une charge ayant un rapport de forme longueur:largeur d'au moins 2:1 qui ne possède pas de caractéristiques viscoélastiques dans les conditions utilisées pour traiter par fusion une matrice polymère chargée, et une charge légère, étant un matériau organique ou inorganique avec une masse volumique inférieure à 0,7 g/cm³, qui ne possède pas de caractéristiques viscoélastiques dans les conditions utilisées pour traiter par fusion une matrice polymère chargée, et le panneau comprend une seconde couche liée à une surface du substrat, dans laquelle de préférence la seconde couche comprend une couche esthétique, une couche de renforcement, une couche d'insonorisation, une couche adhésive, une couche pouvant être liée, une couche de support, une couche imprimable, une couche polymère, une couche réfléchissante, ou des combinaisons de celles-ci.

4. Panneau multicouche selon la revendication 3,
(a) comprenant en outre une couche esthétique, une couche de renforcement, une couche d'insonorisation, une couche adhésive, une couche pouvant être liée, une couche de support, une couche imprimable, une couche polymère ou une couche réfléchissante liée à une surface du substrat opposée à la seconde couche ; ou
(b) dans lequel la seconde couche est liée au substrat avec un adhésif thermofusible, un adhésif sensible à la pression ou un adhésif durcissable ; ou
(c) comprenant en outre une couche pouvant être liée positionnée entre le substrat et la couche esthétique ; de préférence dans laquelle la couche pouvant être liée comprend des polymères fonctionnels et des polyoléfines fonctionnelles ; ou
(d) comprenant en outre une couche de support liée entre le substrat et la couche esthétique, la couche de support étant du liège, des composites de liège, une couche polymère, une couche polymère métallisée, une couche réfléchissante, une couche réceptrice d'impression ou des combinaisons de ceux-ci ; ou
(e) dans lequel la seconde couche comprend une couche de renforcement ayant une structure en nid d'abeille, une structure en mousse, une structure en nid d'abeille chargée, une structure composite polymère chargée, ou des combinaisons de celles-ci ; ou
(f) dans lequel le substrat présente au moins deux parmi un module d'élasticité en flexion supérieur à 700 MPa, une résistance aux chocs sur barreau entaillé d'au moins 300 J/m, un allongement à la traction d'au moins 4 %, une dilatation thermique du substrat inférieure à 0,5 % selon à la méthode d'essai de dilatation thermique telle que décrite dans la description, et un coefficient de dilatation thermique inférieur à 70 µm/m/K ; ou
(g) dans lequel un module d'élasticité en flexion du substrat dans un sens machine ne dépasse pas 30 % au moins d'un module d'élasticité en flexion du substrat transversalement au sens machine ; ou
(h) dans lequel un coefficient de dilatation thermique du substrat dans un sens machine ne dépasse pas 30 % au moins d'un coefficient de dilatation thermique du substrat transversalement au sens machine ; ou
(i) dans lequel une résistance aux chocs du substrat dans le sens machine ne dépasse pas 30 % au moins d'une résistance aux chocs du substrat transversalement au sens machine.

5. Panneau selon la revendication 3, qui est un segment de revêtement de sol.

6. Panneau selon la revendication 5, dans lequel le segment de revêtement de sol a des surfaces de bord opposées avec chaque surface de bord ayant un profil, dans lequel une surface de bord a un profil de connexion et la surface de bord opposée a un profil de réception.

7. Panneau selon la revendication 3, comprenant en outre plusieurs segments de revêtement de sol, chacun ayant des surfaces de bord opposées avec chaque surface de bord ayant un profil, dans lequel une surface de bord a un profil de connexion et la surface de bord opposée a un profil de réception, et dans lequel le profil de connexion d'un premier segment de revêtement de sol s'insère dans le profil de réception d'un deuxième segment de revêtement de sol.

8. Panneau selon la revendication 1, dans lequel le substrat comprend une charge ayant un rapport de forme longueur:largeur d'au moins 2:1 qui ne possède pas de caractéristiques viscoélastiques dans les conditions utilisées pour traiter par fusion une matrice polymère chargée, et une charge légère, étant un matériau organique ou inorganique avec une masse volumique inférieure à 0,7 g/cm³, qui ne possède pas de caractéristiques viscoélastiques dans les conditions utilisées pour traiter par fusion une matrice polymère chargée, lequel panneau est obtenu par préparation d'un mélange sous forme de particules ou de pastilles dudit matériau polymère recyclé, de ladite charge et de ladite charge légère et diffusion ou revêtement dudit mélange et transformation de celui-ci en un panneau en utilisant un procédé continu de presse à double bande, dans lequel aucune étape de traitement par fusion n'est effectuée avant la production de feuille ou de panneau.

9. Panneau selon la revendication 8, comprenant en outre un ou plusieurs parmi une charge inorganique, une charge organique, un agent de couplage, un dessiccant, un lubrifiant, un antimicrobien ou des combinaisons de ceux-ci.

10. Procédé de préparation d'un panneau selon la revendication 1, dans lequel le procédé comprend une liaison par compression thermique, comprenant
(A) la liaison par compression thermique d'un matériau polymère issu d'un procédé d'hydrodésintégration pour former un substrat, et la liaison d'une seconde couche à une surface du substrat pour former un panneau multicouche ; ou
(B)
(a) la diffusion sur une première courroie rotative d'un matériau polymère issu d'un procédé d'hydrodésintégration, et
(b) la liaison par compression thermique du composite entre la première courroie rotative avec une seconde courroie rotative pour former un substrat.

11. Procédé selon la revendication 10(A),
(a) dans lequel le composite est co-diffusé avec un autre matériau polymère, et lors de la liaison par compression thermique, il forme un substrat multicouche ; et/ou
(b) comprenant en outre l'application d'une composition adhésive qui est formée sous forme d'une couche sur le substrat ; et/ou
(c) comprenant en outre le traitement de surface du substrat, de préférence, dans lequel le traitement comprend un traitement au plasma, un traitement au silane, un traitement thermique, un traitement corona, ou des combinaisons de ceux-ci ; et/ou
(d) comprenant en outre la liaison d'une couche esthétique, d'une couche de renforcement, d'une couche d'insonorisation, d'une couche adhésive, d'une couche pouvant être liée, d'une couche de support, d'une couche imprimable, d'une couche polymère, d'une couche réfléchissante ou de combinaisons de celles-ci au substrat.

12. Procédé selon la revendication 10(A), dans lequel le procédé comprend la liaison d'une seconde couche à une surface du substrat pour former un panneau multicouche, de préférence dans lequel la seconde couche comprend une couche esthétique, une couche de renforcement, une couche d'insonorisation, une couche adhésive, une couche pouvant être liée, une couche de support, une couche imprimable, une couche polymère, une couche réfléchissante ou des combinaisons de celles-ci.
